Europäisches Patentamt

European Patent Office

Office européen des brevets

(19)

(11) **EP 0 785 020 B1**

# (12) FASCICULE DE BREVET EUROPEEN

(45) Date de publication et mention
de la délivrance du brevet:
**03.02.1999 Bulletin 1999/05**

(51) Int. Cl.$^6$: **B01J 20/18**, B01D 53/047

(21) Numéro de dépôt: **96402696.7**

(22) Date de dépôt: **11.12.1996**

(54) **Procédé pour la séparation de mélanges d'oxygène et d'azote utilisant un adsorbant à porosité améliorée**

Verfahren zur Trennung von Mischungen von Sauerstoff und Stickstoff mittels eines Adsorbentes mit verbesserter Porosität

Process for separating mixtures of oxygen and nitrogen using an adsorbent with improved porosity

(84) Etats contractants désignés:
**BE CH DE GB IT LI SE**

(30) Priorité: **16.01.1996 FR 9600409**

(43) Date de publication de la demande:
**23.07.1997 Bulletin 1997/30**

(73) Titulaire:
**L'AIR LIQUIDE, SOCIETE ANONYME POUR
L'ETUDE ET L'EXPLOITATION DES PROCEDES
GEORGES CLAUDE
75321 Paris Cédex 07 (FR)**

(72) Inventeurs:
• **Moreau, Serge
  78148 Velizy-Villacoublay (FR)**
• **Barbe, Christian
  92260 Fontenay-sous-Bois (FR)**

(74) Mandataire:
**Le Moenner, Gabriel et al
L'AIR LIQUIDE,
Service Brevets et Marques
75321 Paris Cédex 07 (FR)**

(56) Documents cités:
EP-A- 0 658 364          EP-A- 0 685 429
DE-A- 2 347 574          US-A- 4 925 460
US-A- 5 152 813          US-A- 5 261 947

## Description

L'invention concerne un procédé de séparation d'un mélange d'oxygène et d'azote et plus particulièrement un perfectionnement des procédés conventionnels de type PSA/VSA ou procédés par adsorption par variation de la pression incluant éventuellement une étape de désorption sous pression subatmosphérique, par utilisation d'un adsorbant amélioré.

La récupération de l'oxygène à partir de mélanges d'oxygène et d'azote tels que l'air est d'un grand intérêt sur le plan industriel, l'oxygène trouvant de multiples applications dans de nombreux domaines tels que la fabrication de l'acier, la médecine, la soudure de métaux, la fabrication du papier, la combustion ou la dépollution.

De nombreux procédés de séparation impliquent la mise en contact, dans une zone d'adsorption, du mélange gazeux à séparer contenant l'azote et l'oxygène avec une zéolite permettant une adsorption sélective de l'azote par rapport à l'oxygène de façon à récupérer en sortie de la zone d'adsorption un gaz enrichi en oxygène, puis la régénération de la zéolite par désorption de l'azote. Lors de ces différentes étapes, les conditions de température et de pression sont fixées de façon à optimiser l'efficacité d'adsorption et de désorption de l'azote. Il est notoire que des températures basses favorisent l'adsorption alors que des températures élevées facilitent les processus de désorption de l'azote.

L'adsorption sélective de l'azote sur une zéolite résulte d'interactions fortes entre le moment quadrupolaire de la molécule d'azote et les cations de la zéolite.

On a pu constater en effet qu'en augmentant la charge et la taille des cations de la zéolite on obtient une efficacité d'adsorption plus importante. En ce sens, on a proposé l'utilisation, en tant que matériau adsorbant, de zéolites échangées par des cations métalliques, tels que des cations de métaux alcalins. Les brevets US-A-5 203 887, US-A-3 140 932 et US-4 859 217, illustrent plus particulièrement la meilleure sélectivité de zéolites échangées au lithium vis-à-vis de l'azote, lorsque celui-ci est mélangé à des substances gazeuses moins polaires telles que l'oxygène.

Toutefois, les prix de revient élevés des zéolites au lithium ont limité leur développement dans la technique de séparation des mélanges d'azote et d'oxygène par mise en oeuvre des procédés PSA/VSA.

Il est généralement admis que la diffusion de l'oxygène et de l'azote dans le réseau macroporeux des zéolites communément utilisées dans les procédés PSA/VSA est tellement rapide qu'elle n'influe pas sur l'efficacité d'adsorption de l'azote. En d'autres termes, on suppose négligeable le temps de transport du mélange gazeux devant être séparé aux sites d'adsorption situés au coeur même de la zéolite : dans cette hypothèse, la porosité de la zéolite, qui est une mesure directe de la fraction de volume de la zéolite occupée par les cavités, n'était pas considérée jusque là, comme un facteur déterminant du point de vue de l'efficacité de l'adsorption.

Des considérations diverses liées à la performance globale du procédé PSA/VSA ont conduit cependant à limiter cette porosité. Un raisonnement simple permet de prévoir en effet qu'une augmentation de la porosité s'accompagne d'une raréfaction des sites d'adsorption et ainsi d'une diminution de la capacité d'adsorption de l'azote par unité de volume d'adsorbant. Or de façon à limiter le prix de revient des installations et le coût de fonctionnement pour la mise en oeuvre des procédés PSA/VSA, l'utilisation d'un volume minimal d'adsorbant est souhaitable : ainsi, la porosité des zéolites couramment utilisées est-elle maintenue volontairement basse.

Il résulte par ailleurs de US-A-5 258 060 que l'on a tout intérêt à sélectionner des adsorbants de densité élevée, et donc de porosité relativement faible, de façon à imiter les variations de température au sein de la masse adsorbante, variations qui influencent défavorablement l'efficacité des mécanismes de désorption et d'adsorption de l'azote.

En pratique, la porosité des zéolites industrielles classiques mises en oeuvre dans les procédés PSA/VSA est inférieure à 0,36. A titre d'exemple, Ruthven révèle dans son ouvrage "Adsorption principes and adsorption processes", des valeurs de porosité situées dans l'intervalle 0,32-0,36 pour des zéolites synthétiques. De même, Breck a évalué la porosité d'une zéolite 5A industrielle à 0,315-0,34 (cf. "Zeolite molecular-sieves" John-Wiley & Sons, 1974, 750).

Or, la présente invention s'inscrit en faux contre ces préjugés de l'état de la technique en dévoilant la possibilité d'améliorer les performances des procédés VSA/PSA par accroissement de la porosité et ceci dans des limites bien déterminées.

La productivité d'un procédé VSA/PSA est une mesure du volume d'oxygène récupéré par unité (massique ou volumique) d'adsorbant. Jusqu'à présent, dans la mesure où l'on partait du principe qu'un équilibre entre la phase gazeuse et la phase zéolitique s'instaurait immédiatement après une mise en contact de ces deux phases (dans l'hypothèse d'une diffusion pratiquement immédiate du mélange gazeux à séparer au sein du réseau macroporeux), on supposait que la durée de la phase d'adsorption de l'azote, avant passage à la phase de désorption était déterminée par la quantité d'adsorbant utilisé : il ressort notamment de US-A-5 074 892 que la quantité d'adsorbant nécessaire pour produire 1m$^3$ d'oxygène (généralement désigné par BSF dans la technique) est proportionnelle à la durée de la phase d'adsorption. Le principe de l'équilibre entre la phase gazeuse et la phase zéolitique est plus particulièrement exposé dans US-A-5 258 060 et US-A-5 266 102.

Or, l'invention repose sur la découverte qu'en ajustant la porosité de l'adsorbant à une valeur optimale, il est possible d'accélérer la cinétique d'adsorption et donc de diminuer la durée de mise en contact du mélange gazeux avec l'adsorbant.

On peut aboutir ainsi à une amélioration globale de la productivité horaire des cycles PSA/VSA.

Selon l'invention, c'est donc une augmentation de la porosité par rapport aux valeurs classiques de porosité des zéolites disponibles dans le commerce qui permet une amélioration de la productivité, résultat d'autant plus inattendu qu'il va à l'encontre des préjugés de la technique.

L'invention fournit plus précisément un procédé pour la séparation d'un mélange d'oxygène et d'azote en chacun de ses constituants, comprenant la mise en contact du mélange à séparer, dans une zone d'adsorption, avec un adsorbant sélectif de l'azote, ledit adsorbant étant une zéolite agglomérée présentant un rapport Si/Al inférieur à 5, une porosité comprise entre 0,38 et 0,60 et un paramètre $a_k$ d'au moins 0,5 s$^{-1}$, ledit paramètre $a_k$ caractérisant la cinétique d'adsorption de l'azote sur ledit adsorbant dans ladite zone d'adsorption, conformément au modèle de la Linear Driving Force, étant entendu que lorsque ledit adsorbant est une zéolite au lithium sa porosité peut varier entre 0,25 et 0,60.

Le rapport volumique de l'oxygène à l'azote caractérisant le mélange de départ peut varier de façon quelconque.

Le procédé de l'invention peut être utilisé plus généralement pour enrichir en oxygène un mélange d'azote et d'oxygène contenant en outre de l'argon, tel que l'air. En ce cas, la pureté de l'oxygène obtenue après mise en oeuvre du procédé de l'invention est au maximum de 95,5% en volume, celui-ci restant associé à l'argon et contenant éventuellement un certain pourcentage d'azote.

Ainsi, dans le cadre de la présente demande, on entend par oxygène pur de l'oxygène à 95,5%.

Selon un mode de réalisation préféré, le mélange de départ est un mélange d'oxygène et d'azote contenant plus de 10% en volume d'azote.

Les zéolites sont un groupe d'alumino-silicates métalliques hydratés, naturels ou synthétiques, dont la plupart présentent une structure cristalline. Les zéolites diffèrent les unes des autres de par leur composition chimique, leur structure cristalline et leurs propriétés physiques telles que leur diagramme de diffraction aux rayons X.

De façon schématique les cristaux de zéolite sont constitués de réseaux tétrahédriques de $SiO_4$ et de $AlO_4$ imbriqués, chaque atome d'oxygène faisant partie d'un réseau de $SiO_4$ et d'un réseau de $AlO_4$ de telle sorte que le rapport des atomes d'oxygène aux atomes de silicium et d'aluminium est de deux. Un certain nombre de cations, par exemple des cations de métaux alcalins et alcalino-terreux tels que le sodium, le potassium, le calcium et le magnésium, inclus dans le réseau cristallin, assurent la neutralité électrique de la zéolite.

Un rapport Si/Al inférieur à 5 est caractéristique des zéolites pouvant être employées comme adsorbant dans le procédé de l'invention. On retiendra que pour des rapports Si/Al faibles, l'efficacité d'adsorption est améliorée, la quantité de cations présents dans la zéolite étant plus importante. De manière préférée, ce rapport est compris entre 1 et 1,5.

Les zéolites utilisables selon l'invention sont par exemple la mordénite, l'erionite, la chabazite, ou les zéolites A, D, R, T, X, Y et L.

Pour une description plus précise de ces zéolites on se reportera aux brevets US-A-2 882 243, US-A-2 950 952, US-A-2 882 244 et US-A-3 030 181.

Parmi ces zéolites, les zéolites 5A, 13X et CaX sont plus particulièrement préférées.

Suivant l'invention, il est également possible d'avoir recours à des zéolites échangées par un ou plusieurs cations métalliques tels que les cations dérivés de métaux alcalins, de métaux alcalino-terreux et de métaux de transition. En tant que cations métalliques, on préfère ceux dérivés du calcium, du zinc ou du lithium. Les zéolites échangées au lithium sont plus spécialement préférées dans le groupe des zéolites échangées par des cations métalliques.

Les zéolites échangées au lithium et présentant dans leur réseau cristallin des cations métalliques divalents, tels que $Ca^{2+}$, forment un second groupe préféré de zéolites.

Il va sans dire que l'adsorbant de l'invention peut être constitué d'un mélange de ces diverses zéolites dans des rapports quelconques.

Le procédé de l'invention utilise plus précisément des agglomérats de zéolites dans lesquels les cristaux de zéolite décrits ci-dessus sont associés les uns aux autres par un liant minéral inerte vis-à-vis de l'oxygène et de l'azote. En tant que liant minéral, on peut citer le silice, l'alumine, les alumino-silicates, les argiles telles que la bentonite, le kaolin et l'attapulgite ou tout autre composé équivalent de la technique.

Il doit être entendu cependant que les agglomérats de zéolites utilisables selon l'invention peuvent ne pas contenir de liant. De tels agglomérats sont simplement obtenus par traitement ultérieur des agglomérats de zéolite à base de liant. Ce traitement comprend plus précisément une seconde étape de cristallisation destinée à convertir le liant en phase zéolitique par cuisson à une température comprise entre 60 et 100° C.

Une telle conversion n'est possible que dans le cas de certains liants particuliers, tels que l'argile.

Les macropores de la zéolite correspondent aux espaces interstitiels disposés entre les cristaux constituant les agglomérats : la porosité de la zéolite est une mesure du volume total occupé par les macropores.

Dans le cadre de l'invention, la porosité de l'adsorbant est un paramètre fondamental du procédé de séparation du mélange d'oxygène et d'azote.

Une porosité comprise entre 0,38 et 0,60 est essentielle pour conduire à l'amélioration souhaitée de la productivité horaire.

Dans le cas des zéolites échangées au lithium, cette porosité peut varier dans des limites plus importantes, à savoir entre 0,25 et 0,60.

Des plages préférées de variation de la porosité sont généralement 0,38 à 0,50, et dans le cas des zéolites échangées au lithium 0,30 à 0,60, mieux encore 0,38 à 0,55.

Pour des valeurs de porosité inférieures à 0,38 respectivement 0,25, la cinétique d'adsorption n'est que médiocre et ne permet pas une réduction du temps de mise en contact de la phase zéolitique avec le mélange gazeux. Il s'ensuit que pour de telles valeurs aucune amélioration de la productivité horaire n'est observée.

Par ailleurs, des valeurs de porosité supérieures à 0,60 ne sont pas souhaitables dans la mesure où la capacité d'adsorption résultante serait insuffisante.

Ainsi, en maintenant la porosité dans la plage de variation indiquée, on obtient le meilleur compromis entre cinétique d'adsorption et capacité d'adsorption.

Cependant, la porosité de la zéolite et son rapport Si/Al ne suffisent pas à eux seuls à caractériser l'adsorbant utilisé pour une optimisation de la cinétique d'adsorption de l'azote. D'autres paramètres, tels que le rayon des particules de zéolite, la diffusion moléculaire et la tortuosité du réseau macroporeux sont à prendre en considération. Or, de tels paramètres sont difficilement mesurables. Aussi, plutôt que de chercher à optimiser chacun de ces paramètres, on a découvert qu'il était possible d'adapter le paramètre cinétique $a_K$ tel que défini par D.M. Ruthven dans "Principles of adsorption and adsorption processes" John-Wiley & Sons, 1984, p. 174-178 ou bien dans "Pressure Swing adsorption", VCS Publishers, 1994, p. 45 et 46 et p. 180 à 183, ou encore dans "Gas separation by adsorption processes", Yang Butterworth Publishers, 1987, p. 132-133, de façon à obtenir les meilleures productivités horaires.

Dans ces différents ouvrages le paramètre $a_k$ rend compte de la cinétique d'adsorption de l'azote dans les procédés de séparation de mélanges azote/oxygène. C'est plus précisément dans le cadre d'une modélisation des processus d'adsorption de l'azote que le paramètre $a_k$ a été défini. Le modèle utilisé est couramment désigné dans la technique par le modèle de la Linear Driving Force.

Or, il est apparu qu'en maintenant ce paramètre à une valeur supérieure à $0,5 \text{ s}^{-1}$, tout en fixant la porosité de la zéolite dans la plage de valeur indiquée ci-dessus, une optimisation efficace du procédé global de séparation de l'azote du mélange gazeux pouvait être obtenue.

Généralement une valeur de $a_k$ comprise entre 0,5 et $4 \text{ s}^{-1}$ est avantageuse. Selon un mode de réalisation préféré $a_k$ prend une valeur quelconque entre 1,5 et $4 \text{ s}^{-1}$.

La détermination de la valeur du paramètre $a_k$ peut être réalisée de façon simple par l'homme du métier.

Lorsque la capacité d'adsorption de la zéolite croit de façon linéaire en fonction de la pression à laquelle est soumise la zone d'adsorption, et donc l'adsorbant, on peut montrer que le paramètre $a_k$ satisfait l'équation suivante :

$$a_k = 2 . \frac{\mu}{\sigma^2} \qquad (1)$$

où $\mu$ représente le temps moyen de sortie du front d'adsorption et $\sigma$ représente la largeur temporelle du front d'adsorption.

On accède facilement aux grandeurs $\sigma$ et $\mu$ à partir du tracé de la courbe de percée caractérisant la zone d'adsorption.

Pour réaliser le tracé de cette courbe, il convient de se placer dans des conditions particulières de température, de pression et de concentration en azote afin que l'équation (1) soit vérifiée, et ceci en vue d'une évaluation simple du paramètre $a_k$ : plus précisément, on choisira un mélange de départ d'azote et d'oxygène comprenant moins de 10 % en volume d'azote. On fixera en outre la pression au sein de ladite zone d'adsorption à une valeur inférieure à 2 bar ($2.10^5$ Pa) tout en vérifiant que celle-ci appartient au domaine de linéarité de la courbe représentant les variations de la capacité d'adsorption en fonction de la pression.

Ces conditions sont facilement déterminées par le spécialiste.

Le protocole opératoire suivi pour le tracé de la courbe de percée est par exemple le suivant :

A l'une des extrémités de la zone d'adsorption, on injecte un mélange d'azote et d'oxygène. Dans un premier temps, la totalité de l'azote contenu dans le mélange se trouve adsorbé sur l'adsorbant, de l'oxygène pur étant récupéré en sortie de la zone d'adsorption. Dans la zone d'adsorption, l'adsorbant situé en entrée de zone capte le premier les molécules d'azote du mélange $O_2/N_2$. Pendant ce même temps, l'adsorbant à proximité de la sortie de la zone d'adsorption, étant exclusivement au contact d'un flux d'oxygène, reste intact. La limite entre l'adsorbant encore actif situé du côté de la sortie de la zone d'adsorption et l'adsorbant inactivé (suite à l'adsorption de molécules d'azote) localisé du côté de l'entrée de ladite zone d'adsorption est couramment désignée sous le nom de front d'adsorption. Celui-ci une fois formé avance progressivement le long de la zone d'adsorption par les molécules d'azote du mélange à séparer.

On comprend qu'une fois le front d'adsorption arrivé en fin de la zone d'adsorption, le gaz récupéré en sortie de ladite zone contienne de l'azote en plus de l'oxygène attendu, dans la mesure où la totalité du lit d'adsorbant contenu dans ladite zone d'adsorption se trouve saturée.

En raison de la complexité des mécanismes de diffusion moléculaire et de l'hétérogénéité des agglomérats de zéolite, la saturation de l'adsorbant ne se produit pas de façon uniforme dans la direction perpendiculaire à l'avancée du mélange gazeux au sein de la zone d'adsorption. Ainsi, lorsque celui-ci atteint la fin de la zone d'adsorption, la concentration de l'azote dans le mélange récupéré en sortie croit progressivement. Le procédé PSA/VSA visant à éliminer complètement l'azote du mélange gazeux à purifier, la phase d'adsorption doit être interrompue avant que la totalité de l'adsorbant ne soit effectivement saturée, et ceci de façon à ce que de l'oxygène pratiquement pur soit récupéré en sortie de la zone d'adsorption.

La courbe de percée représente la variation de la concentration en oxygène en sortie de la zone d'adsorption en fonction du temps, le temps 0 correspondant à l'instant précis où la phase d'adsorption est initiée. Cette courbe est définie par l'équation :

$$c = f(t)$$

où c représente la concentration en oxygène dans le mélange gazeux récupéré en sortie, t est la variable temps et f est la fonction figurant les variations de la concentration c en fonction du temps t.

Pour la détermination du paramètre $a_k$, il convient d'enregistrer la courbe de percée. Ceci est réalisé de façon connue en soi par simple mesure de la concentration en oxygène dans le mélange gazeux récupéré en sortie de la zone d'adsorption à différents instants.

Le temps moyen $\mu$ de sortie du front est calculé à partir de la courbe de percée f(t) selon l'équation :

$$\mu = \frac{\int_o^\infty t \cdot f'(t) \cdot dt}{\int_o^\infty f'(t) \cdot dt}$$

ou f'(t) représente la dérivée de la fonction f(t) définie ci-dessus.

De même, la largeur temporelle du front $\sigma$ répond à l'équation suivante :

$$\sigma^2 = \frac{\int_o^\infty (t - \mu)^2 \cdot f'(t) \cdot dt}{\int_o^\infty f'(t) \cdot dt}$$

où f'(t) correspond également à la dérivée de la fonction f(t).

Le paramètre $a_k$ étant tel que

$$a_k = 2 \frac{\mu}{\sigma^2} \qquad (1)$$

est ainsi facilement déterminé à partir des valeurs de $\mu$ et $\sigma$ ainsi calculées.

Les agglomérats de zéolite utilisés en tant qu'adsorbant dans le procédé de l'invention sont sélectifs de l'azote, ce qui implique que le diamètre moyen des macropores est suffisant pour permettre la diffusion de l'azote au niveau des sites d'adsorption de l'adsorbant.

De préférence, la taille moyenne des macropores est supérieure à 0,35 $\mu$m et dans le cas de zéolite échangée au lithium supérieure à 0,25 $\mu$m.

Les agglomérats de zéolite disponibles dans le commerce ne conviennent pas à la mise en oeuvre du procédé de l'invention essentiellement eu égard à leur porosité qui est inférieure à 0,36.

De façon à obtenir des zéolites présentant la porosité appropriée, l'homme du métier saura adapter les conditions opératoires des procédés connus de fabrication d'agglomérats de zéolites.

L'adsorbant de l'invention pourra par exemple être préparé par mélange d'une poudre cristalline de zéolite avec de l'eau et un liant également sous forme de poudre, puis pulvérisation de ce mélange sur des agglomérats de zéolite, jouant le rôle de germes d'agglomération, présentant une porosité la plus proche possible de celle visée. Pendant la pulvérisation les agglomérats de zéolite sont soumis à une rotation continue sur eux-même. Ceci pourra être réalisé en disposant les agglomérats dans un réacteur en rotation sur lui-même autour d'un axe de rotation, ledit axe de rotation étant préférablement incliné par rapport à la direction verticale. Par ce procédé, couramment désigné dans la technique par procédé "boule de neige" on obtient des agglomérats sous forme de billes.

Les agglomérats ainsi obtenus sont ensuite soumis à une cuisson à la température comprise entre environ 500 et 700° C, de préférence une température voisine de 600° C.

Comme exemple de liant, l'homme du métier pourra recourir à de l'argile telle que du kaolin, de la silice ou de l'alumine.

En vue de contrôler la porosité des agglomérats ainsi fabriqués, l'homme du métier sait qu'il peut ajuster différents paramètres tels que l'inclinaison et la vitesse de rotation de l'axe de rotation du réacteur, la durée de la phase de pulvérisation ou la vitesse d'ajout des réactifs lors de la constitution du mélange eau/liant/poudre de zéolite. Il peut même éventuellement ajouter au mélange eau/liant/zéolite, une certaine quantité de substances organiques porogènes. En début de cuisson, la décomposition de ces substances conduit au dégagement d'une phase gazeuse qui gonfle l'agglomérat.

D'autres procédés permettent la préparation des zéolites agglomérées utilisables pour la mise en oeuvre du procédé de l'invention. Ainsi, en variante, on peut utiliser un procédé de pétrissage/extrusion, lequel conduit à des agglomérats de zéolites sous forme de filés.

Les zéolites en poudres utilisées comme matière de départ sont disponibles dans le commerce, notamment auprès de Sociétés telles que Bayer, Grace, Davison, Tosoh et Ceca. Néanmoins, l'homme du métier pourra facilement les préparer par mise en oeuvre des procédés décrits dans la technique.

De telles zéolites cristallines peuvent notamment être synthétisées au départ de silicates et aluminates métalliques. On gardera à l'esprit que le choix des réactifs de départ détermine la nature des cations inclus dans le réseau cristallin de la zéolite.

Cela étant, l'insertion d'autres cations est possible par échange d'ions. Les procédés d'échange d'ions sont largement répandus dans la technique et exposés dans des ouvrages spécialisés.

L'échange d'ions peut par exemple être effectué par percolation d'une solution chaude concentrée du sel approprié au travers d'un lit constitué de la zéolite à échanger.

L'utilisation de zéolite échangée au lithium est particulièrement avantageuse du point de vue de l'efficacité de la séparation, l'azote s'adsorbant sur ce type de zéolite de façon très préférentielle par rapport à l'oxygène. Une faujasite au lithium échangée à au moins 80 % conduit à une amélioration nette de la séparation. Toutefois, des zéolites au lithium échangées à au moins 86 % sont particulièrement préférées.

Dans le cadre de l'invention, on entend par zéolite échangée à au moins 80 %, respectivement 86 % au lithium, une zéolite dont au moins 80 %, respectivement 86 %, des motifs $AlO_2^-$, sont associés à des cations lithium.

Pour la préparation de faujasites au lithium, on pourra utiliser le protocole opératoire suivant au départ d'une zéolite cristalline de type faujasite : au travers d'une colonne garnie de faujasite, maintenue à une température comprise entre 70 et 95° C, on fait percoler une solution aqueuse de sels de lithium, telle qu'une solution aqueuse de chlorure de lithium, dont on ajuste le pH entre 8 et 10 par addition de lithine. Cette opération est poursuivie pendant un temps suffisant de façon à échanger au moins 80 % des cations de la zéolite. On estime généralement que pour introduire une quantité donnée d'ions lithium dans la zéolite, il est nécessaire d'éluer la colonne avec 1,2 à 12 fois cette quantité d'ions lithium. On détermine ainsi facilement le volume de la solution de sels de lithium devant être déversée en tête de colonne, compte tenu de la normalité de la solution. De préférence, on utilisera une solution aqueuse de chlorure de lithium dont la normalité est comprise entre 0,5 et 1,5 N, mieux encore une solution aqueuse environ 1N de chlorure de lithium. De façon avantageuse, on maintiendra à 95° C la température de la zéolite ainsi que celle de la solution de chlorure de lithium pendant toute la durée de l'échange d'ions.

Il doit être entendu cependant que ce mode opératoire n'est proposé qu'à titre illustratif et que tout autre procédé connu de l'état de la technique permettant d'aboutir à une zéolite de type faujasite échangée au lithium peut être mis en oeuvre.

On notera que suivant le volume et la composition de la solution aqueuse de chlorure de lithium éluée au travers de la colonne, il est possible d'ajuster le degré d'échange.

Les avantages économiques résultant de la mise en oeuvre du procédé de l'invention, à savoir notamment la meilleure productivité horaire, permettent de compenser le coût élevé de telles zéolites.

Avant utilisation dans le procédé de l'invention, une activation thermique des agglomérats de zéolite est nécessaire: celle-ci a pour but d'éliminer du réseau macroporeux formant la zéolite agglomérée la plupart de l'eau d'hydratation qu'il contient. De fait, la présence d'eau d'hydratation n'est pas souhaitable dans la mesure où celle-ci en occupant les sites d'adsorption de la zéolite, empêche l'adsorption des molécules d'azote.

L'activation de la zéolite peut être réalisée par l'une quelconque des méthodes connues de la technique.

Une méthode d'activation des zéolites consiste à soumettre la zéolite à une pression d'environ 0,1 à 10 atmosphères ($1.10^4$ Pa à $1.10^6$ Pa) tout en faisant passer un courant d'un gaz inerte au travers du lit d'adsorbant constitué de ladite zéolite et tout en chauffant ladite zéolite jusqu'à une température comprise entre 300 et 650° C à une vitesse de montée en température d'environ 0,1 à 40° C par minute.

En variante, on peut activer la zéolite en la maintenant sous un vide d'environ 0,1 mbar ($1.10^2$ Pa) ou inférieur tout en chauffant la zéolite jusqu'à une température d'environ 300 à 650° C sans nul besoin de recourir au balayage par un gaz inerte.

Une autre alternative consiste à activer la zéolite par un procédé utilisant des microondes tel que décrit dans le brevet US-A-4 322 394.

De façon à produire de l'oxygène en continu, il est connu de disposer en parallèle un certain nombre de lits d'adsorbant que l'on soumet en alternance à un cycle d'adsorption à pression haute et de désorption par abaissement de la pression.

De telles installations sont notamment mises en oeuvre dans les procédés PSA/VSA d'adsorption par variation de la pression. Le cycle de traitement auquel est soumis chaque lit d'adsorbant comprend les étapes consistant à :

a) faire passer un effluent gazeux constitué d'un mélange d'azote et d'oxygène dans une zone d'adsorption comprenant un adsorbant sélectif de l'azote, ledit adsorbant étant une zéolite agglomérée présentant un rapport Si/Al inférieur à 5, une porosité comprise entre 0,38 et 0,60 et un paramètre $a_k$ caractérisant la cinétique d'adsorption de l'azote sur ledit adsorbant dans ladite zone d'adsorption conformément au modèle de la Linear Driving Force, d'au moins 0,5 s$^{-1}$, étant entendu que lorsque ledit adsorbant est une zéolite au lithium, sa porosité peut varier entre 0,25 et 0,60, ce par quoi l'on met en contact ledit effluent gazeux avec ladite zéolite, un effluent gazeux enrichi en oxygène étant récupéré en sortie de la zone d'adsorption, l'azote étant adsorbé sélectivement sur ledit adsorbant;

b) désorber l'azote adsorbé sur l'adsorbant contenu dans la zone d'adsorption par abaissement de la pression partielle d'azote au sein de ladite zone d'adsorption;

c) remonter en pression ladite zone d'adsorption par introduction d'un courant d'oxygène ou d'air.

Ainsi, chaque lit d'adsorbant passe de façon cyclique par une phase a) de production de l'oxygène à pression haute, une phase b) de décompression et une phase c) de recompression.

Selon une variante de réalisation préférée, l'azote est évacué à l'étape b) par l'entrée de la zone d'adsorption.

Par ailleurs, lorsqu'un courant d'oxygène est utilisé pour la recompression de la zone d'adsorption, celui-ci est introduit à contre-courant, en sortie de la zone d'adsorption. Par contre, lorsqu'un courant d'air est utilisé à cette étape, alors celui-ci est introduit à co-courant par l'entrée de la zone d'adsorption.

Il est clair qu'en ajustant les conditions opératoires de l'étape a) conformément aux modes de réalisation préférés décrits ci-dessus, on aboutit à une amélioration des rendement et productivité ainsi qu'à une amélioration de la pureté de l'oxygène récupéré en sortie.

Ainsi, on optera de préférence pour la purification de mélanges oxygène/azote comprenant plus de 10 % en volume d'azote que l'on mettra en contact dans une zone d'adsorption avec un adsorbant constitué d'une zéolite du type faujasite échangée à 86 % au lithium présentant un rapport Si/Al compris entre 1 et 1,5, une porosité comprise entre 0,38 et 0,55, une valeur $a_k$ du paramètre cinétique comprise entre 0,55 et 1 s$^{-1}$ et une taille des pores de l'adsorbant supérieure à 0,25 $\mu$m.

De manière préférée, la température de la zone d'adsorption est maintenue entre -20 et +80° C, la pression d'adsorption étant comprise entre $1.10^5$ et $1.10^6$ Pa.

Selon un mode de réalisation préféré, la pression est maintenue entre $1.10^4$ et $1.10^5$ Pa au cours de l'étape b) de désorption.

La capacité des lits d'adsorbant est limitée par la dimension maximale qui peut être utilisée soit à cause de la résistance mécanique des particules individuelles d'adsorbant, soit à cause de la dimension maximale qu'on peut utiliser pour l'expédition des récipients contenant les adsorbants. C'est pourquoi le fonctionnement de 1 à 3 lits d'adsorbants disposés en parallèle est chose courante dans la technique.

De façon à optimiser les procédés PSA, il est avantageux d'introduire des étapes de pseudo-équilibrages de pression entre deux lits d'adsorbant.

L'invention est décrite maintenant en référence aux exemples de réalisation et aux figures.

La figure 1 représente l'évolution de la pression au sein d'une zone d'adsorption au cours d'un cycle de traitement de purification d'un mélange gazeux d'oxygène et d'azote par un procédé PSA utilisant une installation à trois lits d'adsorbant.

La figure 2 montre l'évolution du rendement du cycle PSA de la figure 1 en fonction du paramètre cinétique $a_k$ pour des valeurs constantes de la porosité et du rapport Si/Al d'une zéolite de type 5A.

La figure 3 est une représentation de l'évolution de la productivité du cycle PSA de la figure 1 en fonction du paramètre cinétique $a_k$ dans les mêmes conditions qu'à la figure 2.

Les figures 4 à 6 représentent les variations des performances du cycle PSA de la figure 1 en fonction de la porosité pour une valeur constante du paramètre cinétique $a_k$, les performances étant dans chaque cas exprimées en termes de rendement et de productivité.

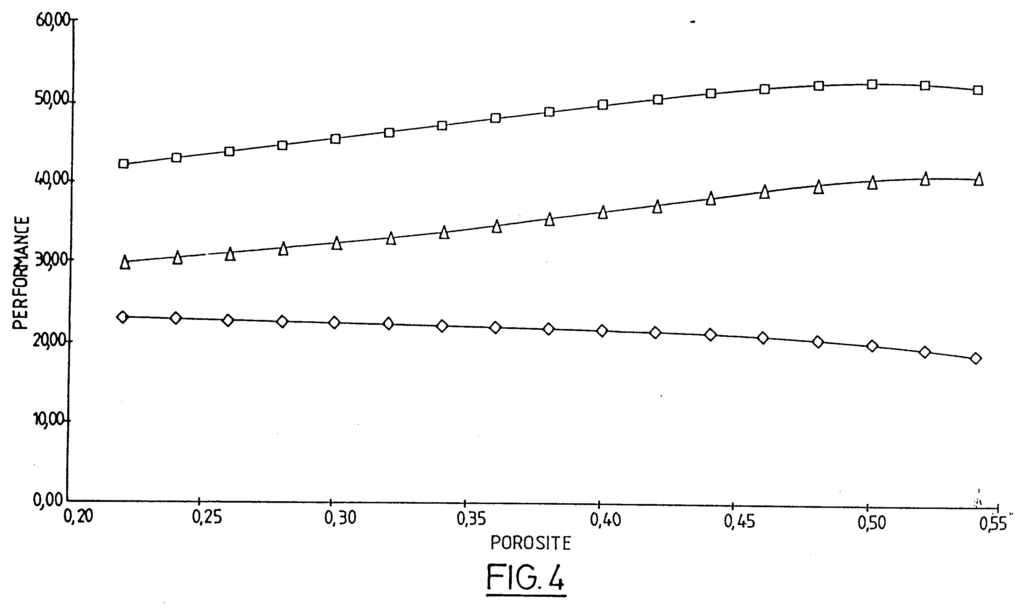

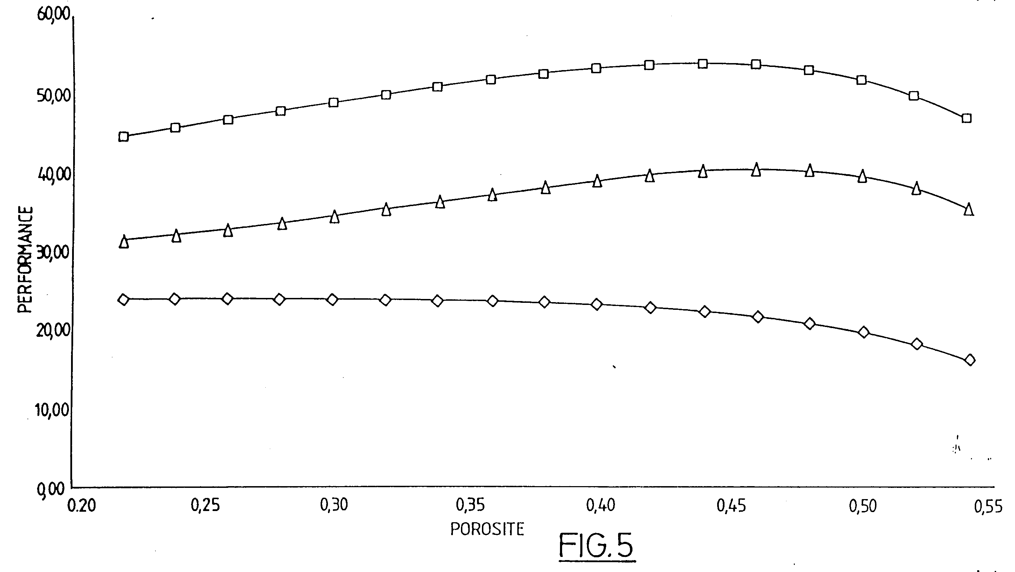

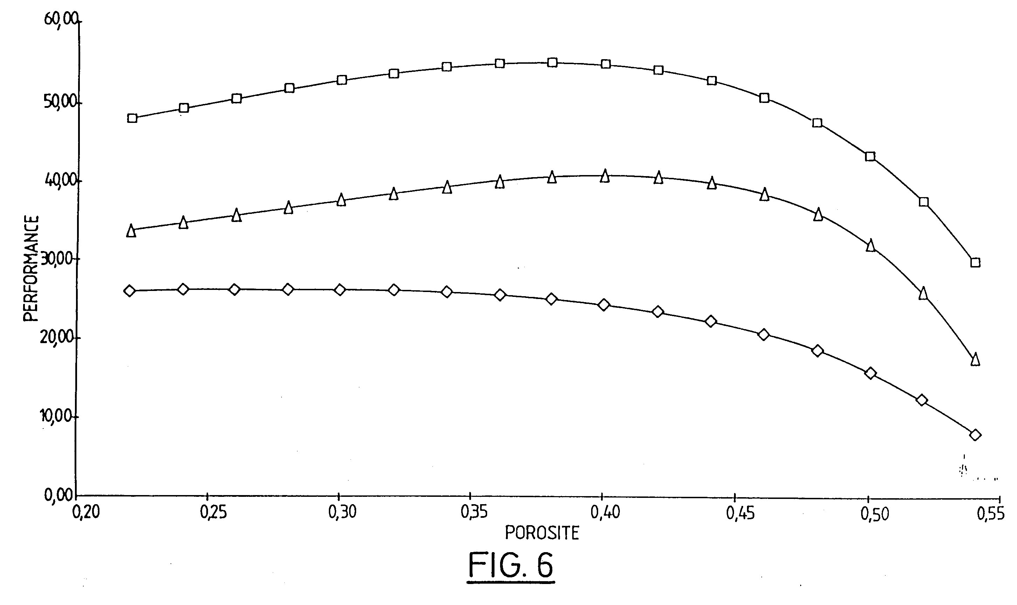

Dans le cas de la figure 4, $a_k$ vaut 0,55 s$^{-1}$; dans le cas de la figure 5, $a_k$ a été fixé à 0,75 s$^{-1}$ et dans le cas de la figure 6, $a_k$ est 1 s$^{-1}$.

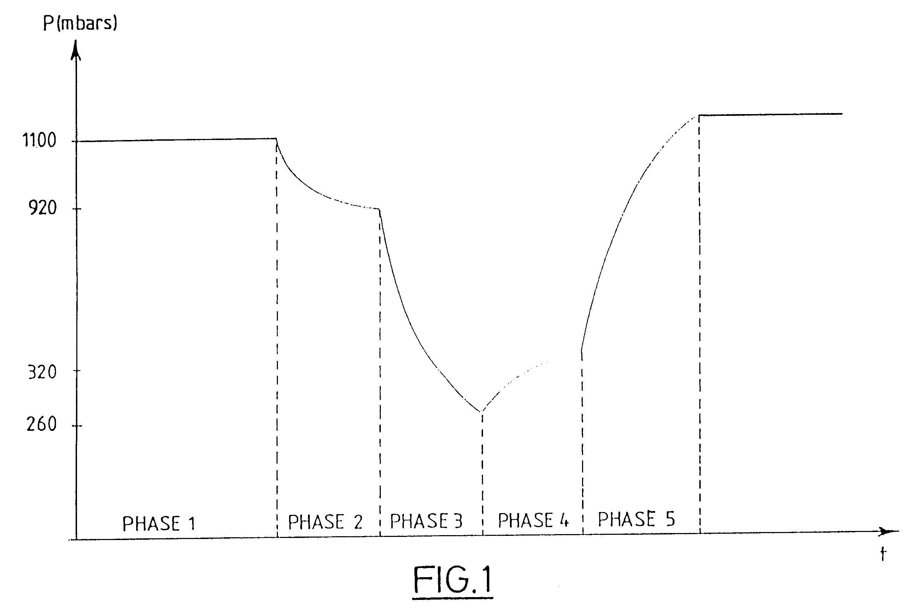

La figure 1 est une représentation schématique de l'évolution de la pression au sein d'une zone d'adsorption au cours d'un cycle de traitement d'un mélange $O_2/N_2$ par un procédé PSA utilisant trois lits d'adsorbant en parallèle.

Il résulte clairement de cette figure que dans cette configuration particulière chaque lit d'adsorbant passe par cinq phases successives que l'on peut brièvement décrire comme suit :

- phase 1 : dans un premier temps, le lit initialement saturé en oxygène fonctionne en adsorption, c'est-à-dire que l'on fait passer en continu dans la zone d'adsorption un courant gazeux constitué du mélange $N_2/O_2$ à séparer et que l'on récupère en sortie de ladite zone d'adsorption l'oxygène gazeux pratiquement pur. Pendant toute cette phase de production de l'oxygène, la pression au sein de la zone d'adsorption est maintenue constante et égale à $1,1.10^5$ Pa (1100 mbars);
- phase 2 : avant que le front d'adsorption de l'azote n'ait quitté la zone d'adsorption, la phase de production est interrompue, c'est-à-dire que la zone d'adsorption n'est plus alimentée en mélange $O_2/N_2$. A cet instant précis, le lit d'adsorbant est relié à celui des deux autres lits d'adsorbant entrant en phase de pseudo-équilibrage. La pression régnant au sein de ce second lit d'adsorption étant inférieure à $1,1.10^5$ pa, l'oxygène récupéré en sortie du premier lit d'adsorbant passe donc dans le second lit d'adsorbant, ce qui contribue à abaisser la pression au sein de la première zone d'adsorption;
- phase 3 : à l'étape suivante l'azote adsorbé sur l'adsorbant est désorbé par réduction progressive de la pression au sein de la zone d'adsorption; pour ce faire on relie l'entrée de ladite zone d'adsorption à une pompe à vide. Au cours de cette phase de décompression la zone d'adsorption passe de $0,92.10^5$ Pa (920 mbars) à $0,26.10^5$ Pa (260 mbars), étant entendu que la sortie de ladite zone d'adsorption est maintenue hermétiquement fermée;
- phase 4 : a l'issue de la phase de décompression, la zone d'adsorption passe en phase de pseudo-équilibrage. De façon à monter la pression de la zone d'adsorption, celle-ci est reliée à celui des deux autres lits d'adsorbant qui, en fin de phase de production, entre en phase 2. Ainsi l'oxygène produit et récupéré en sortie de ce second lit d'adsorbant contribue à augmenter la pression du premier lit d'adsorbant. Il doit être entendu cependant que cette étape ne conduit pas à une égalisation de pression au sein des deux lits d'adsorbant dans la mesure où le courant d'oxygène provenant du second lit d'adsorbant est introduit à contre-courant en sortie de la première zone d'adsorption, circule librement au sein de ladite première zone d'adsorption avant d'être évacué par l'entrée de ladite première zone d'adsorption;
- phase 5 : lorsque la pression de la zone d'adsorption atteint $0,32.10^5$ Pa (320 mbars), on procède à la recompression du lit d'adsorbant. Pour ce faire, l'entrée de la zone d'adsorption étant maintenue hermétiquement close, on introduit par la sortie de ladite zone d'adsorption, à contre-courant, un flux d'oxygène pur jusqu'à atteindre la pression souhaitée de $1,1.10^5$ Pa, soit 1100 mbars.

**Exemples**

Pour illustrer l'invention, on a simulé sur ordinateur un cycle PSA à haute productivité comprenant cinq phases de traitement mises en oeuvre dans trois zones d'adsorption distinctes fonctionnant en parallèle et à température ambiante. Le cycle de traitement correspond plus précisément à celui illustré à la figure 1, discuté ci-dessus.

Dans la simulation envisagée le cycle complet de traitement dure 90 secondes, à savoir 30 secondes de production (phase 1), 30 secondes pour l'ensemble des phases 2 et 3 et 30 secondes pour l'ensemble des phases 4 et 5.

La productivité correspond au volume d'oxygène produit, mesuré dans les conditions normales de température et de pression, par unité massique ou volumique d'adsorbant. On distingue la productivité horaire, où le volume d'oxygène mesuré est le volume d'oxygène produit toutes les heures, de la productivité par cycle, où le volume d'oxygène mesuré est le volume d'oxygène produit au cours d'un cycle PSA (5 phases).

Le rendement est défini par le rapport du volume d'oxygène produit toutes les heures, mesuré dans les conditions normales de température et de pression, au volume d'oxygène contenu dans le mélange initial, mesuré dans les conditions normales de température et de pression.

Le programme utilisé pour la simulation repose sur les principes de conservation de la masse, de conservation de l'enthalpie, de conservation de la quantité de mouvement et utilise le modèle de la Linear Driving Force pour l'évaluation de la cinétique des transferts solide-gaz au sein de la masse d'adsorbant.

Plus précisément, rappelons que selon ce modèle de la Linear Driving Force, la concentration q du composant adsorbé par la phase solide est donné par l'équation :

$$\frac{dq}{dt} = a_k \times (q^* - q)$$

où $a_k$ est le paramètre cinétique défini ci-dessus et $q^*$ est la concentration du composant gazeux adsorbé sur la phase solide une fois l'équilibre entre phase gazeuse et phase solide atteint.

Le paramètre cinétique $a_k$ est relié à la constante de diffusion macropore des composants gazeux dans le réseau macroporeux de l'adsorbant selon

l'équation suivante :

$$a_k = \Omega \times \frac{De}{R^2}$$

où R est le rayon de la particule; $\Omega$ est une constante pour un temps de cycle donné ($\Omega$ vaut environ 15 pour une durée du cycle de traitement de 90 secondes) et De est le coefficient de diffusion macropore efficace; plus précisément, De satisfait l'équation suivante :

$$De = \frac{Dm}{\tau} \times \frac{1}{1 + \frac{1-\epsilon}{\epsilon} \times K}$$

où :

$\epsilon$ est la porosité des macropores;
K est la constante de Henry;
$\tau$ est la tortuosité du réseau macroporeux;
Dm est la diffusion moléculaire;
Dp est la diffusion dans les macropores;
De est la diffusion efficace globale;

$$\text{et } \tau = \frac{1}{0,55 + 0,45 \times \epsilon}$$

Tous ces développements théoriques sont exposés dans "Principes of adsorption and adsorption processes", D.M. Ruthven, John-Wiley & Sons, 1984, p. 174 et 178, ou bien "Pressure swing adsorption", Ruthven, Farooq and Knaebel, VCS Publishers, 1994, p. 45 et 46, p. 180 à 183, ou encore "Gas separation by adsorption processes", Yang, Butterworth Publishers, 1987, p. 132 et 133.

Exemple 1

Dans cet exemple, on a étudié l'influence du paramètre cinétique $a_k$ sur la performance du cycle PSA en termes de productivité (par cycle) et de rendement horaire.

L'adsorbant choisi comme référence est une zéolite 5A de porosité 0,34, présentant un rapport Si/Al de 1, commercialisé par la Société Bayer sous la référence KEG 407. Lorsque disposé dans la zone d'adsorption cet adsorbant présente une valeur du $a_k$ caractérisant l'adsorption de l'azote de 0,75 s$^{-1}$.

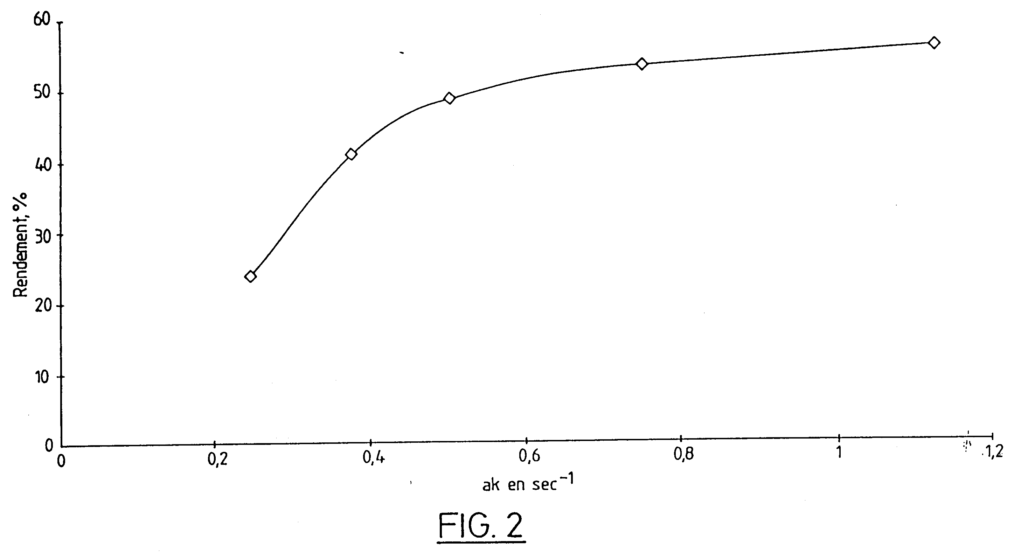

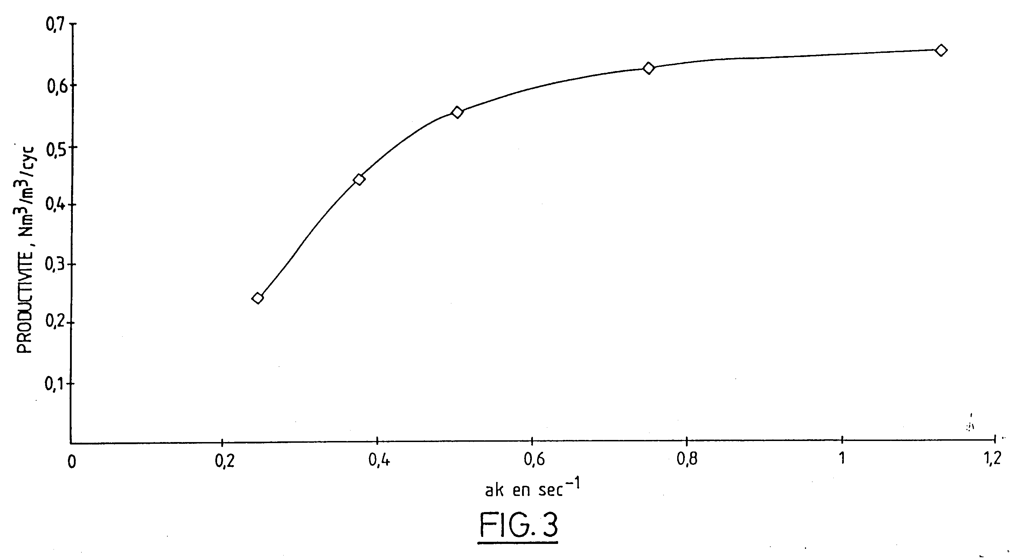

Une simulation du cycle PSA permet de définir les variations du rendement (%) et de la productivité (m$^3$/m$^3$/cycle) en fonction des variations du paramètre $a_k$ (s$^{-1}$ ). Celles-ci ont été respectivement représentées sur les figures 2 et 3 annexées. On constate que les performances décroissent très vite en deçà d'une valeur de 0,5 s$^{-1}$. Ainsi, on voit que le facteur cinétique a une grande influence sur les performances et qu'il existe une valeur inférieure limite. Pour la détermination du paramètre cinétique $a_k$ optimal, l'homme du métier sait néanmoins qu'il faut tenir compte de la durée du cycle de traitement. Ainsi, plus celle-ci sera courte, plus le $a_k$ sera important.

Exemple 2

Dans cet exemple, on a étudié l'influence de la porosité sur la performance du cycle PSA en termes de rendement (%), productivité horaire par unité massique d'adsorbant (m$^3$/h/t) et productivité horaire par unité volumique d'adsorbant (m$^3$/h/m$^3$) pour trois valeurs constantes du paramètre cinétique $a_k$, à savoir 0,55 s$^{-1}$, 0,75 s$^{-1}$ et 1,00 s$^{-1}$.

Les adsorbants choisis comme référence sont des zéolites présentant respectivement les valeurs de $a_k$, de porosité et de dimension des macropores suivantes :

- $a_k$ = 0,55 s$^{-1}$, pour une porosité de 0,34 et une taille moyenne des macropores de 0,25 $\mu$m;
- $a_k$ = 0,75 s$^{-1}$, pour une porosité de 0,34 et une taille moyenne des macropores de 0,4 $\mu$m; et
- $a_k$ = 1,00 s$^{-1}$, pour une porosité de 0,34 et une taille moyenne des macropores de 0,55 $\mu$m.

La zéolite de $a_k$ = 0,75 s$^{-1}$, est la zéolite 5A commercialisée par la Société Bayer sous la référence KEG 407 utilisée à l'exemple 1.

Les zéolites de $a_k$ = 0,55 s$^{-1}$ et $a_k$ = 1,00 s$^{-1}$ sont préparées par tamisage de la zéolite 5A, référencée KEG 407, en vue d'augmenter, respectivement de diminuer la taille moyenne des grains de la zéolite.

On notera que la valeur du $a_k$ est inversement proportionnelle au carré de la taille moyenne des grains.

Par simulation, on fait donc varier la porosité pour chaque valeur de $a_k$.

Les résultats obtenus eu égard aux performances du procédé PSA ont été rapportés sur les figures 4 à 6 annexées.

Plus précisément, la figure 4 rapporte les variations du rendement (%) □ et de la productivité horaire (exprimé en m$^3$/h/t ∆, respectivement en m$^3$/h/m$^3$ ◊) en fonction de la porosité pour un $a_k$ de 0,55 s$^{-1}$;

la Figure 5 rapporte les variations du rendement

(%) □ et de la productivité horaire (exprimé en m³/h/t △, respectivement en m³/h/m³ ◊) en fonction de la porosité pour un $a_k$ de 0,75 s⁻¹ ; et

la figure 6 rapporte les variations du rendement (%) □ et de la productivité horaire (exprimé en m³/h/t △, respectivement en m³/h/m³ ◊) en fonction de la porosité pour un $a_k$ de 1,00 s⁻¹.

On constate que pour une valeur de la porosité ε comprise entre 0,38 et 0,60, il existe un net avantage en terme de rendement, donc en énergie. La productivité par volume d'adsorbant est quant à elle pratiquement constante, alors que la productivité en masse d'adsorbant croit pour ces valeurs particulières de la porosité. Il y a donc tout intérêt du point de vue de l'investissement, à sélectionner une zéolite présentant une porosité comprise entre 0,38 et 0,60, la productivité déterminant l'investissement, notamment en adsorbant.

Il apparaît donc clairement que la présente invention est particulièrement avantageuse dans le cas où l'utilisation de zéolites performantes et onéreuses, telles que des faujasites au lithium, est envisagée.

## Revendications

1. Procédé pour la séparation d'un mélange d'oxygène et d'azote en chacun de ses constituants, comprenant la mise en contact du mélange à séparer, dans une zone d'adsorption, avec un adsorbant sélectif de l'azote, ledit adsorbant étant une zéolite agglomérée présentant un rapport Si/Al inférieur à 5, une porosité comprise entre 0,38 et 0,60 et un paramètre $a_k$ d'au moins 0,5 s⁻¹, ledit paramètre $a_k$ caractérisant la cinétique d'adsorption de l'azote sur ledit adsorbant dans ladite zone d'adsorption conformément au modèle de la Linear Driving Force, étant entendu que lorsque ledit adsorbant est une zéolite au lithium sa porosité peut varier entre 0,25 et 0,60.

2. Procédé selon la revendication 1, caractérisé en ce que le mélange d'azote et d'oxygène comprend plus de 10 % en volume d'azote.

3. Procédé selon l'une quelconque des revendications 1 ou 2, caractérisé en ce que la zéolite agglomérée présente un rapport Si/Al compris entre 1 et 1,5.

4. Procédé selon l'une quelconque des revendications 1 à 3, caractérisé en ce que ledit adsorbant est une érionite ou une chabazite agglomérée.

5. Procédé selon l'une quelconque des revendications 1 à 3, caractérisé en ce que l'adsorbant est une zéolite agglomérée choisie parmi les zéolites 5A, 13X et CaX.

6. Procédé selon l'une quelconque des revendications 1 à 5, caractérisé en ce que l'adsorbant est une zéolite agglomérée échangée avec des ions métalliques dérivés du lithium présentant éventuellement dans son réseau cristallin des cations métalliques divalents tels que $Ca^{2+}$.

7. Procédé selon la revendication 6, caractérisé en ce que l'adsorbant est une faujasite échangée à au moins 80 % au lithium, de préférence 86 % .

8. Procédé selon l'une quelconque des revendications précédentes, caractérisé en ce que la porosité de l'adsorbant est comprise entre 0,38 et 0,50.

9. Procédé selon la revendication 7, caractérisé en ce que la porosité de la faujasite échangée à au moins 80 % au lithium est comprise entre 0,30 et 0,60, de préférence entre 0,38 et 0,55.

10. Procédé selon l'une quelconque des revendications précédentes, caractérisé en ce que le paramètre $a_k$ caractérisant l'adsorbant dans ladite zone d'adsorption est compris entre 0,5 et 4 s⁻¹, de préférence entre 1,5 et 4 s⁻¹.

11. Procédé selon l'une quelconque des revendications précédentes, caractérisé en ce que la taille moyenne des macropores de l'adsorbant est supérieure à 0,35 μm.

12. Procédé selon la revendication 7, caractérisé en ce que la taille moyenne des macropores de la faujasite échangée à au moins 80% au lithium est supérieure à 0,25 μm.

13. Procédé selon l'une quelconque des revendications précédentes, caractérisé en ce qu'il comprend la mise en oeuvre d'un cycle de traitement comprenant les étapes consistant à :

   a) faire passer un effluent gazeux constitué d'un mélange d'azote et d'oxygène dans une zone d'adsorption comprenant un adsorbant sélectif de l'azote, ledit adsorbant étant une zéolite agglomérée présentant un rapport Si/Al inférieur à 5, une porosité comprise entre 0,38 et 0,60 et un paramètre $a_k$ caractérisant la cinétique d'adsorption de l'azote sur ledit adsorbant dans ladite zone d'adsorption conformément au modèle de la Linear Driving Force, d'au moins 0,5 s⁻¹, étant entendu que lorsque ledit adsorvant est une zéolite au lithium, se porosité peut varier entre 0,25 et 0,60, ce par quoi l'on met en contact ledit mélange d'azote et d'oxygène avec ladite zéolite, un effluent gazeux enrichi en oxygène étant récupéré en sortie de la zone d'adsorption, l'azote étant adsorbé sélectivement sur ledit adsorbant;

b) désorber l'azote adsorbé sur l'adsorbant contenu dans la zone d'adsorption par abaissement de la pression partielle d'azote au sein de ladite zone d'adsorption ;

c) remonter en pression ladite zone d'adsorption par introduction d'un courant d'oxygène ou d'air.

14. Procédé selon la revendication 13, caractérisé en ce que lors de l'étape a), la zone d'adsorption est alimentée en mélange gazeux d'azote et d'oxygène à une pression comprise entre $1.10^5$ Pa et $1.10^6$ Pa et à une température comprise entre -20 et +80° C.

15. Procédé selon l'une quelconque des revendications 13 et 14, caractérisé en ce qu'à l'étape b), la pression en oxygène au sein de la zone d'adsorption est comprise entre $1.10^4$ Pa et $1.10^5$ Pa.

16. Procédé selon l'une quelconque des revendications 13 à 15, caractérisé en ce que la durée du cycle de traitement est comprise entre 30 et 180 secondes.

## Claims

1. Process for separating a mixture of oxygen and nitrogen into each of its constituents, comprising contacting the mixture to be separated, in an adsorption zone, with a selective adsorbent for nitrogen, the said adsorbent being an agglomerated zeolite having an Si/Al ratio of less than 5, a porosity of between 0.38 and 0.60 and a parameter $a_k$ of at least $0.5$ $s^{-1}$, the said parameter $a_k$ characterizing the kinetic adsorption of nitrogen on the said adsorbent in the said adsorption zone according to the model of the Linear Driving Force, it being understood that when the said adsorbent is a lithium zeolite its porosity may vary between 0.25 and 0.60.

2. Process according to claim 1, characterized in that the mixture of nitrogen and oxygen includes more than 10 % by volume of nitrogen.

3. Process according to either of claims 1 or 2, characterized in that the agglomerated zeolite has an Si/Al ratio of between 1 and 1.5.

4. Process according to any of claims 1 to 3, characterized in that the said adsorbent is an agglomerated erionite or chabazite.

5. Process according to any of claims 1 to 3, characterized in that the said adsorbent is an agglomerated zeolite selected from the 5A, 13X and CaX zeolites.

6. Process according to any of claims 1 to 5, characterized in that the said adsorbent is an agglomerated zeolite exchanged with metal ions derived from lithium possibly having in its crystalline network divalent metal cations such as $Ca^{2+}$.

7. Process according to claim 6, characterized in that the adsorbent is a faujasite exchanged with at least 80 %, preferable 86 %, of lithium.

8. Process according to any of the preceding claims, characterized in that the porosity of the adsorbent is between 0.38 and 0.50.

9. Process according to claim 7, characterized in that the porosity of the faujasite exchanged with at least 80 % lithium is between 0.30 and 0.60, preferably between 0.38 and 0.55.

10. Process according to any of the preceding claims, characterized in that the parameter $a_k$ characterizing the adsorbent in the said adsorption zone is between 0.5 and 4 $s^{-1}$, preferably between 1.5 and 4 $s^{-1}$.

11. Process according to any of the preceding claims, characterized in that the average size of the macropores of the adsorbent is greater than 0.35 $\mu m$.

12. Process according to claim 7, characterized in that the average size of the macropores of the faujasite exchanged with at least 80 % lithium is greater than 0.25 $\mu m$.

13. Process according to any of the preceding claims, characterized in that it comprises operating a treatment cycle including the steps consisting of :

a) passing a gaseous effluent consisting of a mixture of nitrogen and oxygen into an adsorption zone including a selective adsorbent for nitrogen, the said adsorbent being an agglomerated zeolite having an Si/Al ratio of less than 5, a porosity of between 0.38 and 0.60 and a parameter $a_k$, characterizing the kinetic adsorption of nitrogen on the said adsorbent in the said adsorption zone according to the model of the Linear Driving Force, of at least 0.5 $s^{-1}$, it being understood that when the said adsorbent is a lithium zeolite its porosity may vary between 0.25 and 0.60, wherein the mixture of nitrogen and oxygen is contacted with the said zeolite, a gaseous effluent enriched in oxygen being recovered at the outlet from the adsorption zone, nitrogen being adsorbed selectively on the said adsorbent;

b) desorbing the nitrogen adsorbed on the adsorbent contained in the adsorption zone by lowering the partial pressure of nitrogen within the said adsorption zone;

c) raising the pressure of the adsorption zone again by introducing a stream of oxygen or air.

14. Process according to claim 13, characterized in that during step a), the adsorption zone is supplied with a gaseous mixture of nitrogen and oxygen at a pressure of between $1.10^5$ Pa and $1.10^6$ Pa and at a temperature of between -20°C and +80°C.

15. Process according to either of claims 13 or 14, characterized in that in the step b), the pressure of oxygen within the adsorption zone is between $1.10^4$ Pa and $1.10^5$ Pa.

16. Process according to any of claims 13 to 15, characterized in that the duration of the treatment cycle is between 30 and 180 seconds.

**Patentansprüche**

1. Verfahren zum Zerlegen eines aus Sauerstoff und Stickstoff bestehenden Gemisches in seine Bestandteile, bei dem das zu zerlegende Gemisch in einer Adsorptionszone mit einem für Stickstoff selektiven Adsorptionsmittel in Kontakt gebracht wird, wobei das Adsorptionsmittel ein agglomerierter Zeolith ist, der ein Si/Al-Verhältnis kleiner 5, eine Porosität zwischen 0,38 und 0,6 und einen Parameter $a_k$ von mindestens 0,5 $s^{-1}$ aufweist, und der Parameter $a_k$ die Adsorptionskinetik von Stickstoff an dem Adsorptionsmittel in der Adsorptionszone entsprechend dem Linear-Driving-Force-Modell charakterisiert, vorauagesetzt, daß, wenn das Adsorptionsmittel ein Lithium enthaltender Zeolith ist, die Porosität zwischen 0,25 und 0,6 schwanken kann.

2. Verfahren nach Anspruch 1, dadurch gekennzeichnet, daß das Gemisch aus Stickstoff und Sauerstoff mehr als 10 Vol.-% Stickstoff enthält.

3. Verfahren nach Anspruch 1 oder 2, dadurch gekennzeichnet, daß der agglomerierte Zeolith ein Si/Al-Verhältnis zwischen 1 und 1,5 aufweist.

4. Verfahren nach einem der Ansprüche 1 bis 3, dadurch gekennzeichnet, daß das Adsorptionsmittel ein Erionit oder ein agglomerierter Chabazit ist.

5. Verfahren nach einem der Ansprüche 1 bis 3, dadurch gekennzeichnet, daß das Adsorptionsmittel ein agglomerierter Zeolith ist, der aus den Zeolithen 5A, 13X und CaX ausgewählt ist.

6. Verfahren nach einem der Ansprüche 1 bis 5, dadurch gekennzeichnet, daß das Adsorptionsmittel ein agglomerierter Zeolith ist, der mit von Lithium abgeleiteten Metallionen ausgetauscht ist und dessen Kristallstruktur ggfs. zweiwertige Metallkationen wie $Ca^{2+}$ aufweist.

7. Verfahren nach Anspruch 6, dadurch gekennzeichnet, daß das Adsoptionsmittel ein Faujasit ist, der zu mindestens, 80%, Vorzugsweise 86% mit Lithium ausgetauscht ist.

8. Verfahren nach einem der vorstehenden Ansprüche, dadurch gekennzeichnet, daß die Porosität des Adsorptionsmittels zwischen 0,38 und 0,5 liegt.

9. Verfahren nach Anspruch 7, dadurch gekennzeichnet, daß die Porosität des Faujasits, der zu mindestens 80% mit Lithium ausgetauscht ist, zwischen 0,3 und 0,6, vorzugsweise zwischen 0,38 und 0,55 liegt.

10. Verfahren nach einem der vorstehenden Ansprüche, dadurch gekennzeichnet, daß der Parameter $a_k$, der das Adsorptionmittel in der Adsorptionszone charakterisiert, zwischen 0,5 und 4 $s^{-1}$, vorzugsweise zwischen 1,5 und 4 $s^{-1}$ liegt.

11. Verfahren nach einem der vorstehenden Ansprüche, dadurch gekennzeichnet, daß die mittlere Makroporengröße des Adsorptionsmittels größer als 0,35 $\mu$m ist.

12. Verfahren nach Anspruch 7, dadurch gekennzeichnet, daß die mittlere Makroporengröße des Faujasits, der zu mindestens 80% mit Lithium ausgetauscht ist, größer als 0,25 $\mu$m ist.

13. Verfahren nach einem der vorstehenden Ansprüche, dadurch gekennzeichnet, daß ein Behandlungszyklus angewendet wird, der folgende Schritte umfaßt:

a) Einleiten eines gasförmigen, aus einem Gemisch aus Stickstoff und Sauerstoff bestehenden Fluids in eine Adsorptionszone, die ein für Stickstoff selektives Adsorptionsmittel enthält, wobei das Adsorptionsmittel ein agglomerierter Zeolith ist, der ein Si/Al-Verhältnis kleiner 5, eine Porosität zwischen 0,38 und 0,6 und einen Parameter $a_k$ von mindestens 0,5 $s^{-1}$ aufweist, welcher die Adsorptionskinetik von Stickstoff an dem Adsoptionsmittel in der Adsoptionszone gemäß dem LinearDriving-Force-Modell charakterisiert, vorausgesetzt, daß, wenn das Adsorptionsmittel ein Lithium enthaltender Zeolith ist, die Porosität zwischen 0,25 und 0,6 schwanken kann, wodurch das Gemisch aus Stickstoff und Sauerstoff mit dem Zeolith in Kontakt gebracht wird, ein sauerstoffangereichertes, gasförmiges Fluid am Auslaß der Adsorptionszone gewonnen wird und Stickstoff selektiv an dem Adsorptionsmittel adsorbiert wird;

b) Desorbieren des an dem in der Adsorptionszone enthaltenen Adsorptionsmittel adsorbierten Stickstoffs durch Minderung des Stickstoffpartialdrucks innerhalb der Adsorptionszone;

c) Druckerhöhung in der Adsorptionszone durch Einleiten eines Sauerstoff- oder Luftstroms.

14. Verfahren nach Anspruch 13, dadurch gekennzeichnet, daß die Adsorptionszone während des Schritts a) mit einem gasförmigen Gemisch aus Stickstoff und Sauerstoff versorgt wird, das unter einem Druck zwischen $1 \times 10^5$ Pa und $1 \times 10^6$ Pa steht und eine Temperatur zwischen -20 und +80 °C aufweist.

15. Verfahren nach Anspruch 13 oder 14, dadurch gekennzeichnet, daß beim Schritt b) der Sauerstoffdruck innerhalb der Adsorptionszone zwischen $1 \times 10^4$ Pa und $1 \times 10^5$ Pa liegt.

16. Verfahren nach einem der Ansprüche 13 bis 15, dadurch gekennzeichnet, daß der Behandlungszyklus zwischen 30 und 180 Sekunden dauert.

$\underline{\text{FIG.1}}$

P(mbars)

1100

920

320

260

PHASE 1 | PHASE 2 | PHASE 3 | PHASE 4 | PHASE 5

t

EP 0 785 020 B1

FIG. 2

FIG.3

EP 0 785 020 B1

FIG. 4

EP 0 785 020 B1

FIG.5

EP 0 785 020 B1

FIG. 6

EP 0 785 020 B1